# EUROPEAN PATENT APPLICATION

(11) **EP 1 571 027 A1**
(43) Date of publication of application: **07.09.2005**
(21) Application number: 04105783.7
(22) Date of filing: 15.11.2004
(51) Int. Cl.: B60J 10/12

(54) **Moveable sealing for vehicle roof opening**

(30) Priority: 04.03.2004 DE 202004003396 U
(71) Applicant: Inalfa Roof Systems Group B.V., 5804 AH Venray (NL)
(72) Inventor: Manders, Peter Christiaan Leonardus Johannes, 5961 SM Horst (NL); Snellenberg, Ronny Marinus, 5708 DN Helmond (NL)
(74) Representative: Voncken, Bartholomeus Maria Ch.

(57) **Abstract**

An open roof construction for a vehicle is provided, comprising a roof opening in a stationary roof part and a closure means which is movable between a position for closing said roof opening and a position for opening said roof opening, wherein the closure means has two opposite edges extending longitudinally in parallel to the direction of movement of the closure means, whereas the roof opening has two corresponding longitudinally extending edges, and wherein the longitudinally extending edges of at least one of said closure means and roof opening each are provided with a seal member engaging a corresponding longitudinally extending edge of the other of said closure means and roof opening in the closing position of the closure means. The seal member is movable out of engagement with the corresponding edge when the closure means starts to move from its closing position towards its opening position.

## Description

The invention relates to an open roof construction for a vehicle, comprising a roof opening in a stationary roof part and a closure means which is movable between a position for closing said roof opening and a position for opening said roof opening, wherein the closure means has two opposite edges extending longitudinally in parallel to the direction of movement of the closure means, whereas the roof opening has two corresponding longitudinally extending edges, and wherein the longitudinally extending edges of at least one of said closure means and roof opening each are provided with a seal member engaging a corresponding longitudinally extending edge of the other of said closure means and roof opening in the closing position of the closure means.

For providing an effective seal when the closure means is in its closing position, the seal member will firmly engage the corresponding edge. Such a firm engagement, however, has the disadvantage that the movement of the closure means, especially when starting to move from its closing position towards its opening position, leads to undesired friction between the seal member and the corresponding edge. This effect will be increased by uncontrolled local deformations of the seal member at the start of such a movement of the closure means. The friction caused leads to an accelerated wear, and the quality of the seal will diminish as a result of frequent use.

It is an object of the present invention to provide an open roof construction of the type referred to above, in which said disadvantage is avoided in a simple, yet nevertheless effective manner.

Thus, in accordance with the present invention, an open roof construction for a vehicle is provided, comprising a roof opening in a stationary roof part and a closure means which is movable between a position for closing said roof opening and a position for opening said roof opening, wherein the closure means has two opposite edges extending longitudinally in parallel to the direction of movement of the closure means, whereas the roof opening has two corresponding longitudinally extending edges, and wherein the longitudinally extending edges of at least one of said closure means and roof opening each are provided with a seal member engaging a corresponding longitudinally extending edge of the other of said closure means and roof opening in the closing position of the closure means, characterized in that the seal member is movable out of engagement with the corresponding edge when the closure means starts to move from its closing position towards its opening position.

By moving the seal member out of engagement with the corresponding edge when the closure means starts to move, no undesired friction between the seal member and corresponding edge will occur. This not only will lengthen the functional life of the seal member, but will also diminish the force (power) required for opening the closure means. It is noted, that the relation between the movement of the closure means and the movement of the seal member can be such, that the the closure means and seal member begin to move at the same moment, or that one of these parts begins to move shortly before the other part begins so.

In a preferred embodiment of the open roof construction in accordance with the present invention, the seal member is movable transversally, substantially in parallel to the main plane of the closure means. Such a movement of the seal member transversally (i.e. substantially in parallel to the main plane of the closure means) is very effective, while limiting the vertical height of the mechanism required for such a movement.

In accordance with another embodiment, the closure means is operated by a driving mechanism and said driving mechanism also provides the movement of the seal member. Thus, the driving mechanism which is already present for operating the closure means will, in an effective manner, also be used for moving the seal member in the appropriate manner. The driving mechanism will be constructed in such a manner, that the movement of the seal member occurs when the closure means itself starts to move.

The movement of the seal member may be realised in many different ways. A possible solution is provided by an embodiment, in which the seal member is attached to a respective edge by means of a spring member urging it towards the corresponding edge, the driving mechanism being able to move the seal member in an opposite direction against the spring load of the spring member. When the driving mechanism is not acting upon the seal member, the spring member keeps the seal member in engagement with the corresponding edge, thus maintaining a proper seal. When, however, at the beginning of the movement of the closure means from its closing position towards its opening position, the driving mechanism starts to move the seal member out of engagement with the corresponding edge, said seal member is moved against the spring load, away from the corresponding edge.

It is noted that when the driving mechanism is deactivated, two possibilities occur: in such a deactivated situation of the driving mechanism the spring member can be maintained in its moved position opposite to the spring load of the spring member; however, it is possible too that by deactivating the driving mechanism the seal member will automatically return to its original position under influence of the spring load of the spring member.

In yet another embodiment of the open roof construction in accordance with the present invention, the seal member is attached to an elongate member supported by a number of spring members spaced apart in the longitudinal direction of the closure means. The combination of a number of spring means spaced apart and an elongate member supported by such spring members guarantees that the seal member will maintain its shape (which, in most cases, will be a elongate shape in correspondence with the contour of the corresponding edge) notwithstanding its movement.

In still another preferred embodiment of the open roof construction in accordance with the present invention, the driving mechanism is provided with a pushing member extending longitudinally and being movable transversally for engaging engagement members attached to the seal member.

When, as stated above, the seal member is attached to an elongate member, such engagement members can be attached to said elongate member, thus indirectly to the seal member itself.

The seal member may be attached to the closure means, which is preferred because it will lead to a simple construction of the driving mechanism. However, it does not prevent the possibility of an embodiment, in which the seal member is attached to the roof opening. Further, it is conceivable too, that seal members are attached to the closure means as well as to the roof opening, in which case only one or both seal members can be movable in accordance with the present invention.

Hereinafter the invention will be elucidated referring to the drawing, in which an embodiment of an open roof construction in accordance with the present invention is illustrated.
Figure 1 shows, schematically and in a top plan view, an embodiment of an open roof construction in accordance with the present invention;
figure 2 shows, schematically and on a larger scale, a transversal section according to II-II in fig. 1, in a first position, and
figure 3 shows a view in accordance with fig.2, in a second position.

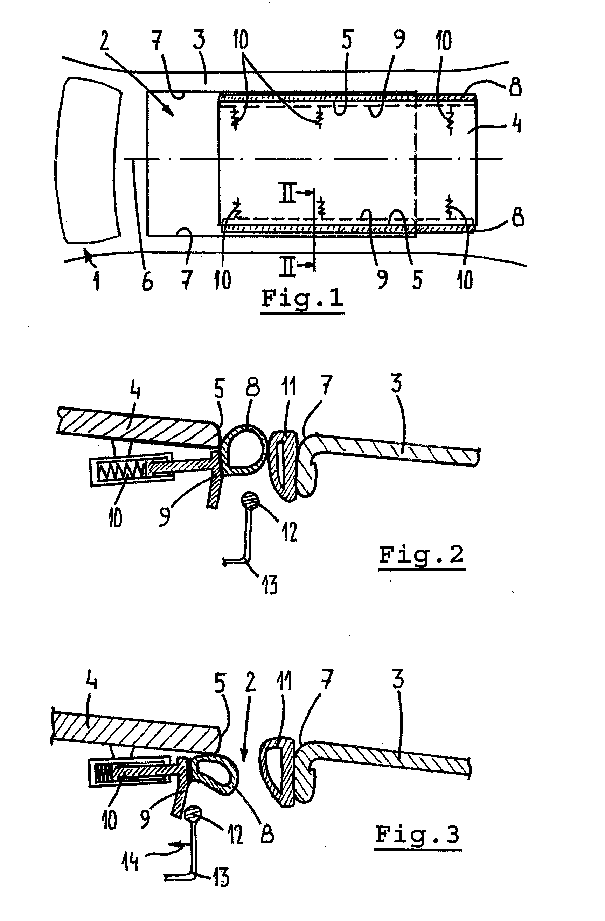

Firstly referring to figure 1, an open roof construction for a vehicle 1 comprises a roof opening 2 in a stationary roof part 3 and a closure means 4 which is movable between a position for closing said roof opening 2 and a position for opening said roof opening 2.

The closure means 4 has two opposite edges 5 extending longitudinally in parallel to the direction of movement of the closure means 4 (which direction is in parallel to a centre line 6 of the vehicle 1).

The roof opening 2 has two corresponding longitudinally extending edges 7.

In the illustrated embodiment the longitudinally extending edges 5 of the closure means 4 are provided with seal members 8 which, in a closing position of the closure means 4, will engage the corresponding longitudinally extending edges 7 of the roof opening 2.

Each seal member 8 is attached to an elongate member 9 (illustrated in dashed lines in figure 1). Each elongate member 9 is supported by a number of spring members 10 spaced apart in the longitudinal direction of the closure means 4 and attached thereto. The number and positioning of said spring members 10 may differ from what has been shown in figure 1.

Now reference is made to figures 2 and 3. The illustrated longitudinal edge 7 of the roof opening 2 has attached thereto a seal member 11 for cooperation with seal member 8; however, it is noted, that such a seal member 11 is not necessary and that seal member 8 may also directly engage the longitudinal edge 7 of the roof opening 2.

Figures 2 and 3 show a pushing member 12 which is part of an elswise known driving mechanism 13 for (in a manner not shown in detail) operating the closure means 4. The pushing member 12 extends longitudinally (thus perpendicularly to the plane of drawing of figures 2 and 3) and can engage corresponding engagement members of the elongate member 9.

Figure 2 shows a situation, in which the pushing member 12 is distanced from the elongate member 9, such that the spring members 10 are able to urge the seal member 8 towards and into engagement with the longitudinal edge 7, (or, in the present case, the seal member 11 attached thereto). This situation corresponds with a closing position of the closure means 4.

When the closure means 4 moves from its closing position towards an opening position the driving mechanism 13 is activated and the pushing member 12 is moved in accordance with arrow 14 in figure 3 to move the elongate member 9 with seal member 8 against the spring load of the spring members 10 away from the longitudinal edge 7 of the roof opening 2. As a result, seal member 8 will disengage said corresponding longitudinal edge 7 (or seal member 11), after which the closure means 4 may be moved towards its closure position under influence of the driving mechanism 13 (in a manner not shown in detail, but known in a general sense).

The invention is not limited to the embodiment described before, which may be varied widely within the scope of the invention as defined by the appending claims. Thus, the spring members 10 may have a different shape, or may be dispensed with, in which case driving mechanism 13 not only is able to move seal member 8 out of engagement with the corresponding longitudinal edge 7, but is also able to move it again into engagement therewith. Further, when a seal member 11 is provided on the corresponding longitudinal edge 7 of the roof opening, such a seal member 11 also may be movable in addition to, or instead of, seal member 8.

## Claims

1. Open roof construction for a vehicle, comprising a roof opening in a stationary roof part and a closure means which is movable between a position for closing said roof opening and a position for opening said roof opening, wherein the closure means has two opposite edges extending longitudinally in parallel to the direction of movement of the closure means, whereas the roof opening has two corresponding longitudinally extending edges, and wherein the longitudinally extending edges of at least one of said closure means and roof opening each are provided with a seal member engaging a corresponding longitudinally extending edge of the other of said closure means and roof opening in the closing position of the closure means, **characterized in that** the seal member is movable out of engagement with the corresponding edge when the closure means starts to move from its closing position towards its opening position.

2. Open roof construction according to claim 1, wherein the seal member is movable transversally, substantially in parallel to the main plane of the closure means.

3. Open roof construction according to claim 1 or 2, wherein the closure means is operated by a driving mechanism and said driving mechanism also provides the movement of the seal member.

4. Open roof construction according to claim 3, wherein the seal member is attached to a respective edge by means of a spring member urging it towards the corresponding edge, the driving mechanism being able to move the seal member in an opposite direction against the spring load of the spring member.

5. Open roof construction according to claim 4, wherein the seal member is attached to an elongate member supported by a number of spring members spaced apart in the longitudinal direction of the closure means.

6. Open roof construction according to any of the claims 3-5, wherein the driving mechanism is provided with a pushing member extending longitudinally and being movable transversally for engaging engagement members attached to the seal member.

7. Open roof construction according to any of the previous claims, wherein the seal member is attached to the closure means.
